# EUROPEAN PATENT APPLICATION

(11) **EP 3 051 521 A2**
(43) Date of publication of application: **03.08.2016**
(21) Application number: 16153462.3
(22) Date of filing: 29.01.2016
(51) Int. Cl.: G08G 5/00, G08G 5/02, G08B 21/02, G08B 7/00

(54) **SYSTEMS AND METHODS FOR ALERTING HELICOPTER PILOTS TO UNDESIRABLE OPERATING CONDITIONS DURING LANDING OPERATIONS**

(30) Priority: 02.02.2015 US 201514611544
(71) Applicant: Honeywell International Inc., Morris Plains, NJ 07950 (US)
(72) Inventor: ISHIHARA, Yasuo, Morris Plains, NJ New Jersey 07950 (US); CONNER, Kevin J., Morris Plains, NJ New Jersey 07950 (US); JOHNSON, Steve, Morris Plains, NJ New Jersey 07950 (US)
(74) Representative: Houghton, Mark Phillip

(57) **Abstract**

A system and method for alerting a helicopter pilot to an undesirable operating condition during landing operations are provided. Avionics data are supplied from an avionics data source. A controller coupled to receive at least a portion of the avionics data from the avionics data source is configured, upon receipt of the avionics data, to determine when the undesirable operating condition exists and, upon determining that the undesirable operating condition exists, to generate an alert signal that provides notification to the helicopter pilot to increase helicopter airspeed.

## Description

### TECHNICAL FIELD

The present invention generally relates to systems and methods for alerting helicopter pilots to undesirable operating conditions during landing operations, and more particularly, to systems and methods for evaluating avionics data to determine whether to produce such an alert.

### BACKGROUND

Helicopter engines typically utilize less power when they are in motion than as they hover (i.e., low to zero airspeed). In industry terms, a helicopter may be said to be flying on the "backside of its power envelope" as it flies at slow airspeed, meaning that the engine is required to produce more power to maintain the helicopter in its slow speed or hover. Thus, as the airspeed of the helicopter decreases (and the helicopter moves towards the backside of its power envelope), the helicopter engine may typically be required to generate increasing power.

Naturally, however, as a helicopter is piloted toward a landing location, its airspeed slows. Thus, as a helicopter is piloted toward the landing location, the engine must typically work harder to generate additional power. In some instances, a helicopter pilot may slow the airspeed of the helicopter on approach too soon, such that the helicopter begins to rapidly approach the backside of its power envelope. In some circumstances, the engine may be unable to produce sufficient power to desirably arrest the descent of the helicopter during a landing operation.

This circumstance may be avoided-if the helicopter retains sufficient altitude- by increasing the airspeed of the helicopter, such as by piloting the helicopter into a dive to increase the airspeed of the helicopter so that less engine power is required to arrest the descent of the helicopter. In certain instances, however, a helicopter may have descended to an altitude that is unsuitable to perform such an airspeed increasing maneuver.

Hence, there is a need for systems and methods for alerting helicopter pilots to one or more undesirable operating conditions during landing operations (e.g., low airspeed, increasing descent rate, low altitude, rapidly increasing engine power output), so that undesirable landing circumstances can be avoided.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a system for alerting a helicopter pilot to an undesirable operating condition during landing operations includes an avionics data source and a controller. The avionics data source is configured to supply avionics data. The controller is coupled to receive at least a portion of the avionics data from the avionics data source and is configured, upon receipt of the avionics data, to determine when the undesirable operating condition exists and, upon determining that the undesirable operating condition exists, to generate an alert signal that provides notification to the helicopter pilot to increase helicopter airspeed.

In another embodiment, a system for alerting a helicopter pilot to an undesirable operating condition during landing operations includes a helicopter takeoff sensor, an altitude sensor, an engine power sensor, an altitude rate sensor, an airspeed sensor, and a controller. The helicopter takeoff sensor determines whether the helicopter is beginning an ascent and generates takeoff data. The altitude sensor measures a radio altitude of the helicopter and generates altitude data. The engine power sensor measures an engine power expenditure of the helicopter and generates engine power expenditure data. The altitude rate sensor measures an altitude rate of the helicopter and generates altitude rate data. The airspeed sensor measures an airspeed of the helicopter and generates airspeed data. The controller is configured to receive the takeoff data, the altitude data, the engine power expenditure data, the altitude rate of the helicopter, and the airspeed data. The controller is further configured to determine, based on the received data, whether to generate an alert signal.

In yet another embodiment, a method for alerting a helicopter pilot to an undesirable operating condition during landing operations includes supplying avionics data to a processor, processing the avionics data in the processor to determine when the undesirable operating condition exists, and upon determining that the undesirable operating condition exists, generating, with the processor, an alert signal that provides notification to the helicopter pilot to increase helicopter airspeed.

Furthermore, other desirable features and characteristics of the systems and methods described herein will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 illustrates, in accordance with various embodiments, a helicopter descending at a high rate of descent, flying at a low airspeed, and utilizing a substantially greater engine power;
FIG. 2 illustrates, in accordance with various embodiments, a block diagram of a system for alerting helicopter pilots to one or more undesirable operating conditions during landing operations;
FIG.3 illustrates, in accordance with various embodiments, a logic diagram for a system for alerting helicopter pilots to one or more undesirable operating conditions during landing operations;
FIG. 4 illustrates, in accordance with various embodiments, a process for alerting helicopter pilots to one or more undesirable operating conditions during landing operations; and
FIG. 5 illustrates, in accordance with various embodiments, a helicopter moving at an increased airspeed and utilizing a substantially less than maximum engine power.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

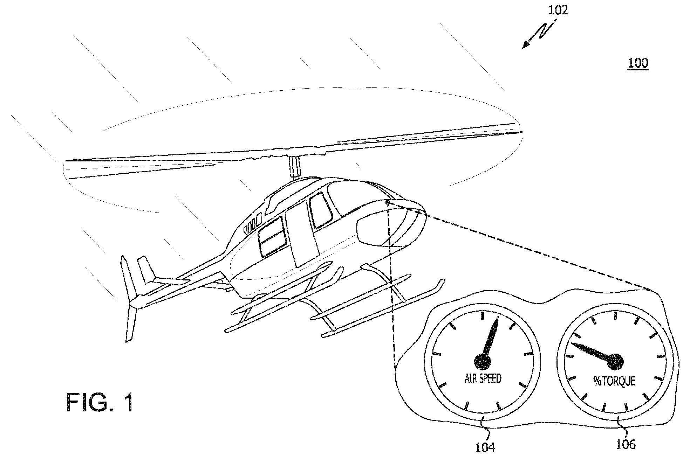

As described above, and as shown with respect to Figure 1, helicopter engines typically utilize less engine power during forward flight than as they hover. That is, as described above, helicopters move toward the backside of their power envelope (and utilize more power) as their airspeed slows to decrease below what is known as an effective translational lift (ETL) speed. However, helicopters typically utilize less power as they increase their airspeed. Thus, as the airspeed of the helicopter decreases, the helicopter engine may be required to generate increasing power to arrest descent or maintain level flight.

As described above, as a helicopter **102** is piloted toward a landing location, its airspeed typically slows on its approach. Therefore, as a helicopter **102** is piloted toward the landing location, the engine must typically work harder to generate additional power as the helicopter **102** slows down below the ETL speed in preparation to land.

In some instances, a helicopter pilot may pilot the helicopter **102** vertically (or substantially vertically) toward the landing location at a rate of descent that is undesirable rather than approaching the landing location at an angle and at a suitable airspeed. This may occur, for example, because the helicopter pilot is not monitoring certain avionics data, such as an airspeed indicator **104,** a torque indicator **106,** an altimeter, etc, or does not perceive a significant tailwind component, if one is present. Thus, having slowed the airspeed of the helicopter **102,** as shown by the airspeed indicator **104,** to land the helicopter **102,** the helicopter engine may be operating at a substantially high power, as shown by the torque indicator **106.** Under these conditions, the engine (or engines) may be unable to produce sufficient power to desirably arrest the descent of the helicopter **102** during a landing operation.

This circumstance can be avoided if the helicopter retains sufficient altitude by increasing the airspeed of the helicopter **102.** In other words, if the helicopter **102** retains sufficient altitude, the helicopter **102** can be piloted into a dive to increase the airspeed of the helicopter 102. A maneuver of this type can help the helicopter **102** to accelerate toward the ETL speed. In certain instances, however, a helicopter **102** may have descended to an altitude that is unsuitable to perform such a dive. For example, in some instances, by the time a pilot realizes that the helicopter **102** is descending at an undesirable altitude rate and operating at a substantially high engine power, the altitude of the helicopter **102** may be too low to place the helicopter **102** into a dive, resulting in a variety of undesirable consequences.

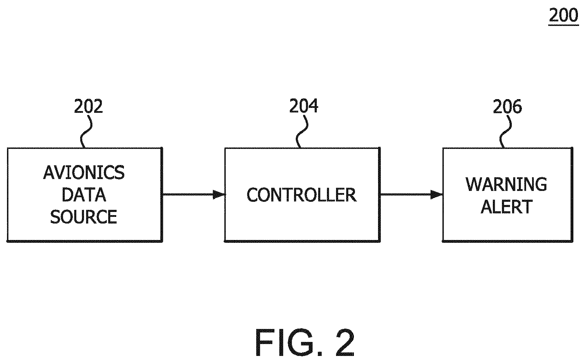

With reference to Figure 2, a system **200** for alerting a helicopter pilot to undesirable operating conditions during a landing operation is shown. The system **200** comprises an avionics data source **202,** a controller **204,** and an alert element **206.**

The avionics data source **202** provides takeoff data (e.g., information about whether the helicopter **102** is taking off), altitude data (e.g.., a radio altitude of the helicopter 102), engine power expenditure data (e.g., a torque or instantaneous or average power expenditure of a helicopter engine or engines, depending upon the particular helicopter), altitude rate data (e.g., an rate of descent of the altitude of the helicopter **102),** and airspeed data (e.g., an airspeed of the helicopter **102).**

In various embodiments, the data provided by the avionics data source **202** is collected by a plurality of sensors on the helicopter. Similarly, in various embodiments, the avionics data source **202** comprises the plurality of sensors. For example, a takeoff sensor can indicate whether the helicopter is taking off or not, while a radio altitude sensor can measure the radio altitude, a torque sensor or sensors can measure the engine torque(s) or power expenditures, an altitude rate sensor can measure the altitude rate, and an airspeed sensor can measure the airspeed of the helicopter **102.**

The controller **204** can comprise any type of controller or computer processor that can receive the data provided by the avionics data source **202.** The controller **204** is therefore communicatively coupled to the avionics data source **202.** The controller **204** processes the data received from the avionics data source, as described below, to determine whether to generate an alert signal.

The alert element **206** can comprise any suitable alert element, such as any aural or visual alert element configured to provide an alert to a pilot that, for example, the airspeed of the helicopter is low. An aural alert element may comprise a speaker or other sound generating system or element. A visual alert element may comprise a light, a lamp, or other light generating system or element. The alert element **206** may also comprise a combination of both of an aural alert element and visual alert element. The alert element **206** is communicatively coupled to the controller **204,** and is configured to receive the alert signal generated by the controller **204,** as described above. Thus, the alert element **206** is turned on or activated in response to receipt of the alert signal.

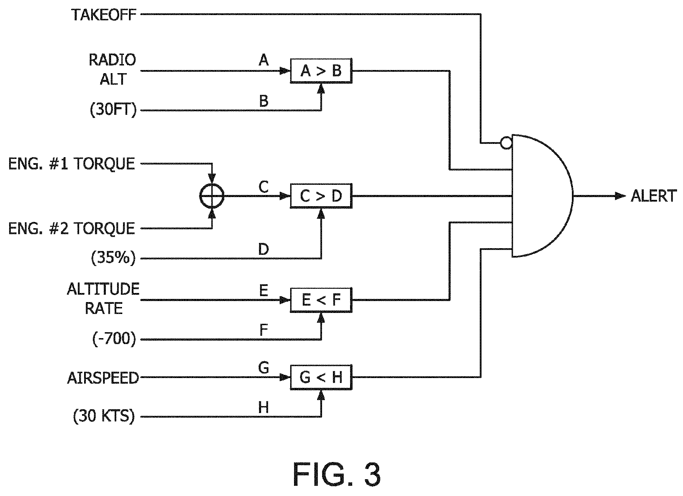

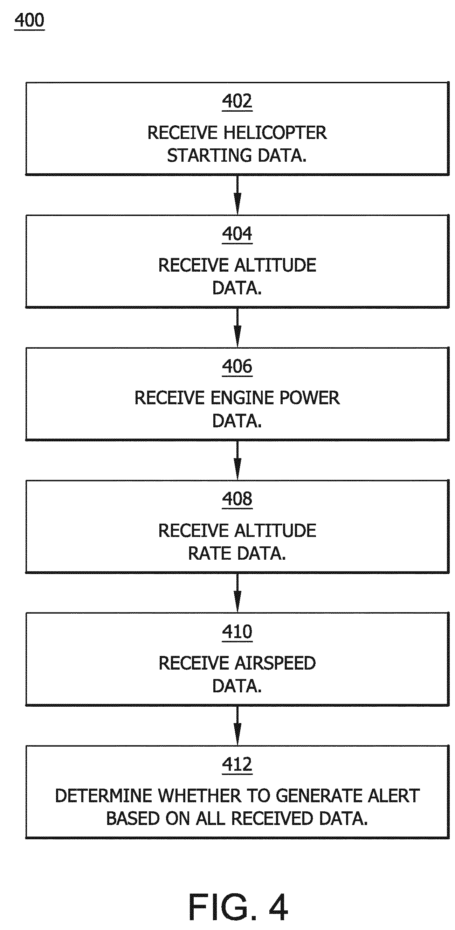

With reference to Figures 3 and 4, and in general, the controller **204** determines whether to generate an alert signal based upon the data received from the avionics data source 202. It will be appreciated that the logic depicted in Figure 3 is merely exemplary and provided for ease of illustration and explanation..

Accordingly, the controller **204** receives the takeoff data (step **402),** the altitude data (step **404),** the engine power expenditure data (step **406),** the altitude rate data (step 408), and the airspeed data (step **410).** Having received this data, the controller **204** determines that the alert signal should be generated if the helicopter is not taking off, the radio altitude is greater than an altitude threshold value, the engine torque (or combined engine torque, where there is more than one engine) is greater than an engine power threshold value, the altitude rate is less than an altitude rate threshold value, and the airspeed is less than an airspeed threshold value (step **412).**

To clarify, in simple logical terms, the controller **204** generates the alert signal as follows:
Generate alert if: !(takeoff) && (radio altitude > altitude threshold value) && (engine torque > engine power threshold value) && (altitude rate < altitude rate threshold value) && (airspeed < airspeed threshold value).

In one embodiment, the alert is a low airspeed alert. In addition, in one embodiment, although a variety of threshold values are contemplated, the threshold values are as follows: (a) altitude threshold value: 30 feet, (b) engine power threshold value 35% of maximum engine power, (c) altitude rate threshold value: -700 feet per minute, and (d) airspeed threshold value: 30 knots.

Thus, as shown at Figure 3, if the helicopter **102** is NOT taking off, AND the radio altitude, A, is greater than the altitude threshold value, B, (e.g., 30 feet) AND the combined torque (or power expenditure) of the helicopter engines, C, is greater than the engine power threshold value D (e.g., 35% of the maximum combined torque that the engines can produce) AND the altitude rate, E, is less than the altitude rate threshold value, F, (e.g., minus 700 feet per minute) AND the airspeed of the helicopter **102,** G, is less than the airspeed threshold value, H, (e.g., 30 knots), THEN an alert signal, such as a low airspeed alert signal, is generated by the controller **204.** The alert signal is transmitted by the controller **204** to the alert element **206,** causing the alert element **206** to generate the alert for the pilot.

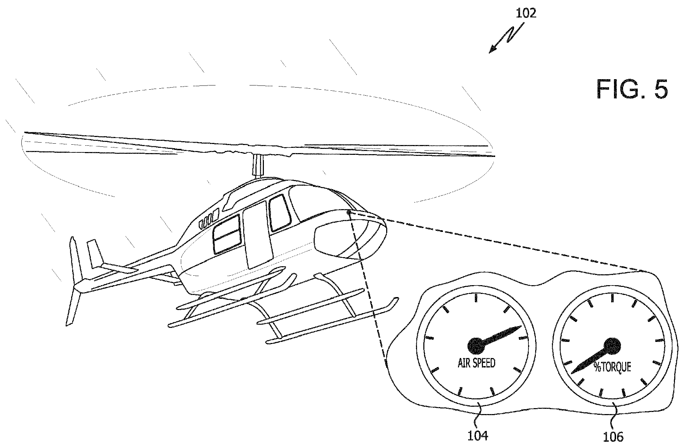

As a result, a pilot can, in response to the alert, be provided sufficient warning time to increase the airspeed of the helicopter **102** by entering a dive (descending toward ground to increase airspeed toward the ETL speed) while there is still time to do so, rather than at an altitude that is below the threshold altitude that prevents or may prevent such action (as determined, in part, based on the altitude data measured by the altitude sensor). A helicopter **102** making such a recovery in response to the alert being triggered is illustrated at Figure 5. As shown, the helicopter **102** has entered a dive to regain airspeed above the threshold altitude. The systems and methods disclosed herein can thus improve the safety and operation of the helicopter **102** by providing a pilot of the helicopter **102** sufficient time to correct the airspeed of the helicopter **102** as it makes its approach to land.

Persons of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. The implementation of such functionality as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor or controller may be a microprocessor, but in the alternative, the processor may be any conventional processor, controller, microcontroller, or state machine. A processor or controller may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art.

In this document, relational terms, such as first and second, may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. Various changes may be made in the function and arrangement of elements described in an exemplary embodiment without departing from the scope of the invention as set forth in the appended claims.

## Claims

**1.** A system for alerting a helicopter pilot to an undesirable operating condition during landing operations, the system comprising:
an avionics data source configured to supply avionics data; and
a controller coupled to receive at least a portion of the avionics data from the avionics data source, the controller configured, upon receipt of the avionics data, to: determine when the undesirable operating condition exists and,
upon determining that the undesirable operating condition exists, generate an alert signal that provides notification to the helicopter pilot to increase helicopter airspeed.

**2.** The system of claim 1, wherein the avionics data received by the controller includes one or more of takeoff data, altitude data, engine power expenditure data, altitude rate data, and airspeed data

**3.** The system of claim 2, further comprising:
a helicopter takeoff sensor configured to supply takeoff data indicating whether the helicopter is taking off.

**3.** The system of claim 2, wherein the controller disables the alert signal in response to the takeoff data indicating that the helicopter is taking off.

**4.** The system of claim 1, wherein the controller transmits the alert signal to at least one of an aural or visual alert element.

**5.** The system of claim 2, wherein the controller compares the altitude data to an altitude threshold value, the engine power expenditure data to an engine power threshold value, the altitude rate data to an altitude rate threshold value, and the airspeed data to an airspeed threshold value, to determine whether the undesirable operating condition exists.

**6.** The system of claim 5, wherein the altitude threshold value is 30 feet, the engine power threshold value is 35% of total engine power, the altitude rate threshold value is minus 700 feet per minute, and the airspeed threshold value is 30 knots.

**7.** The system of claim 1, wherein the controller is configured to determine that the undesirable operating condition exists in response to:
(i) an altitude of the helicopter greater than an altitude threshold value,
(ii) an engine power expenditure of the helicopter greater than an engine power threshold value,
(iii) the altitude rate of the helicopter being less than an altitude rate threshold value, and
(iv) an airspeed of the helicopter being less than an airspeed threshold value.

**8.** A system for alerting a helicopter pilot to an undesirable operating condition during landing operations, the system comprising:
a helicopter takeoff sensor that determines whether the helicopter is beginning an ascent and generates takeoff data;
an altitude sensor that measures a radio altitude of the helicopter and generates altitude data;
an engine power sensor that measures an engine power expenditure of the helicopter and generates engine power expenditure data;
an altitude rate sensor that measures an altitude rate of the helicopter and generates altitude rate data;
an airspeed sensor that measures an airspeed of the helicopter and generates airspeed data; and
a controller configured to receive the takeoff data, the altitude data, the engine power expenditure data, the altitude rate of the helicopter, and the airspeed data, the controller further configured to determine, based on the received data, whether to generate an alert signal.

**9.** The system of claim 8, the controller further configured to transmit the alert signal to an alert element.

**10.** The system of claim 9, wherein the alert is at least one of aural, visual, or both.

**11.** The system of claim 8, the controller further configured to compare the altitude data to an altitude threshold value, the engine power expenditure data to an engine power threshold value, the altitude rate data to an altitude rate threshold value, and the airspeed data to an airspeed threshold value, to determine whether the undesirable operating condition exists.

**12.** The system of claim 11, wherein the altitude threshold value is 30 feet, the engine power threshold value is 35% of total engine power, the altitude rate threshold value is minus 700 feet per minute, and the airspeed threshold value is 30 knots.

**13.** The system of claim 8, wherein the controller is configured to determine that the undesirable operating condition exists in response to:
(i) an altitude of the helicopter being greater than an altitude threshold value,
(ii) an engine power expenditure of the helicopter being greater than an engine power threshold value,
(iii) the altitude rate of the helicopter being less than an altitude rate threshold value, and
(iv) an airspeed of the helicopter being less than an airspeed threshold value.

**14.** The system of claim 9, the alert comprising a low airspeed alert that indicates that the airspeed of the helicopter should be increased by pilot.

**15.** A method for alerting a helicopter pilot to an undesirable operating condition during landing operations, the method comprising the steps of:
supplying avionics data to a processor;
processing the avionics data in the processor to determine when the undesirable operating condition exists; and
upon determining that the undesirable operating condition exists, generating, with the processor, an alert signal that provides notification to the helicopter pilot to increase helicopter airspeed.
